# EUROPEAN PATENT SPECIFICATION

(11) **EP 4 563 876 B1**
(45) Date of publication and mention of the grant of the patent: **02.09.2026**
(21) Application number: 22953212.2
(22) Date of filing: 16.12.2022
(51) Int. Cl.: F17D 5/06, F16L 11/12, F16L 11/133, F16L 55/00, G01L 19/08, G01M 3/28

(54) **CASING AND CAP ASSEMBLY FOR MARINE HOSE FLUID LEAK DETECTOR AND MARINE HOSE FLUID LEAK DETECTION SYSTEM**
GEHÄUSE UND KAPPENANORDNUNG FÜR EINEN MEERESSCHLAUCHFLÜSSIGKEITSLECKDETEKTOR UND MEERESSCHLAUCHFLÜSSIGKEITSLECKDETEKTIONSSYSTEM
ENSEMBLE BOÎTIER ET CAPUCHON POUR DÉTECTEUR DE FUITE DE FLUIDE DE TUYAU MARIN ET SYSTÈME DE DÉTECTION DE FUITE DE FLUIDE DE TUYAU MARIN

(30) Priority: 26.07.2022 JP 2022118905
(43) Date of publication of application: 04.06.2025
(73) Proprietor: The Yokohama Rubber Co., Ltd., Hiratsuka-shi, Kanagawa 254-8601 (JP)
(72) Inventor: ISHIBASHI, Yusuke, Hiratsuka-shi, Kanagawa 254-8601 (JP)
(74) Representative: Grünecker Patent- und Rechtsanwälte PartG mbB
(86) International application number: PCT/JP2022/046535
(87) International publication number: WO 2024/024124

(56) References cited:
- EP-A1- 3 795 974
- EP-A1- 3 879 253
- EP-A1- 3 940 363
- WO-A1-2020/129457
- WO-A1-2020/183803
- JP-A- 2012 233 558
- JP-A- 2021 046 929
- JP-A- S58 174 784
- JP-U- 3 153 131

## Description

### Technical Field

The present invention relates to an assembly of a casing for a fluid leakage detector for a marine hose and a cap and a fluid leakage detection system for a marine hose, and more particularly to an assembly of a casing and a cap and a fluid leakage detection system for a marine hose including the assembly that can provide improved durability of the detector and reduced risk of damage to both the detector and an object due to contact between the detector and the object and have good wireless communication with the detector.

### Background Art

In marine hoses, by providing a fluid retention layer between reinforcing layers, leaked fluid can be temporarily stored in the fluid retention layer to prevent leakage to the outside of the hose. In order to detect the fluid that has leaked into the fluid retention layer, various fluid leakage detection systems have been proposed (for example, see Patent Document 1).

In the fluid leakage detection system proposed in Patent Document 1, a fluid retention layer can communicate with a detector via a communication pipe. When the fluid flows into the fluid retention layer, the pressure in the pressure holding chamber formed inside the casing of the detector increases through the communication pipe. This pressure change can be acquired by a communication unit as detected pressure data by a pressure sensor unit with the use of a return radio wave from a passive IC tag and thus is useful for reliably detecting the fluid leakage while facilitating a work for checking the fluid leakage.

The pressure sensor unit and the IC tag are housed in the pressure holding chamber. Thus, in the casing, the upper side of the pressure holding chamber is covered by a radio wave transmission portion. In order to improve radio wave communication with the communication unit, the radio wave transmission portion is disposed to be exposed in a protruding manner from the surface of a marine hose. Accordingly, when the marine hose is installed in the sea or collected into a ship, or when the marine hose is used in the sea, the radio wave transmission portion is more likely to be subjected to external force from a certain object and damaged thereby. Conversely, when a metal cover or the like is simply mounted around the top of the radio wave transmission portion to protect the radio wave transmission portion, good radio wave communication is impaired. There is also a risk that an object that contacts the metal cover will be damaged. Therefore, there is room for improvement in improving the durability of the detector, reducing the risk of damage to both the detector and the object due to contact between the detector and the object, and having good wireless communication with the detector.

Other similar systems of leak detection in a marine hose are described in EP3795974 and EP3940363.

### Citation List

### Patent Literature

Patent Document 1: JP 2021-46929 A

### Summary of Invention

### Technical Problem

An object of the present invention is to provide a casing and cap assembly and a fluid leakage detection system for a marine hose including the assembly that can provide improved durability of a detector and reduced risk of damage to both the detector and an object due to contact between the detector and the object and have good wireless communication with the detector.

### Solution to Problem

To achieve the object described above, an assembly of a casing for a fluid leakage detector for a marine hose and a cap according to an embodiment of the present invention is an assembly of a casing for a fluid leakage detector and a cap, the casing being installed on a surface of a marine hose and communicably connected to a fluid retention layer formed in the marine hose, the cap being fixed to the casing. The casing includes a base portion made of metal and having a cylindrical shape, a radio wave transmission portion that watertightly blocks an upper end portion side of the base portion, and three or more projection portions made of metal and projecting from the base portion above the radio wave transmission portion and a pressure holding chamber surrounded by the base portion and the radio wave transmission portion. The projection portions are disposed at intervals in a circumferential direction at positions on an outer circumferential side of the radio wave transmission portion in a plan view. Upper end portions of the projection portions are separated from each other. A pressure sensor unit and a passive IC tag connected to the pressure sensor unit are accommodated in the pressure holding chamber. The cap is an annular body made of resin or rubber that continuously covers an upper end portion of each of the projection portions in the circumferential direction in a plan view and is formed with an engaging portion that engages with the upper end portion of each of the projection portions. In a state where the engaging portion engages with the upper end portion of each of the projection portions and the cap is disposed on the upper end portion of each of the projection portions and is fixed to the casing, a region on an inner circumferential side from the projection portions and a region on an outer circumferential side from the projection portions communicate with each other through a gap in the circumferential direction between lower end portions of the projection portions adjacent in the circumferential direction.

The fluid leakage detection system for a marine hose according to an embodiment of the present invention includes: the assembly of a casing for a fluid leakage detector for a marine hose and a cap described above; a detector including the pressure sensor unit and the IC tag accommodated in the pressure holding chamber; a communication pipe extending on a surface of the marine hose and communicably connecting the fluid retention layer and the detector; a check valve allowing only a flow from a side of the communication pipe to a side of the pressure holding chamber; and a radio wave transmission unit and a radio wave reception unit disposed outside the marine hose. A return radio wave is transmitted from the IC tag in response to a transmission radio wave transmitted from the radio wave transmission unit. Detected pressure data from the pressure sensor unit is sent via the return radio wave and received by the radio wave reception unit.

### Advantageous Effects of Invention

With the assembly according to the embodiment of the present invention, since the three or more projection portions made of metal and projecting above the radio wave transmission portion are disposed at intervals in the circumferential direction at positions on the outer circumferential side of the radio wave transmission portion in a plan view, the top surface of the radio wave transmission portion is protected by these projection portions. Consequently, the risk of damage to the radio wave transmission portion is reduced, which is advantageous for improvement of the durability of the detector. Moreover, the projection portions are disposed at intervals in the circumferential direction and the upper end portions of the projection portions are separated from each other in a plan view, and thus the disadvantage that good radio wave communication is impaired by these projection portions is avoidable.

The upper end portions of the projection portions are covered by the cap which is an annular body made of a resin that is continuous in the circumferential direction in a plan view, and thus even if the upper end portions of the projection portions made of metal come into contact with a certain object, it is advantageous in reducing the risk of damage to both the detector and the object. Moreover, in a state where the cap is fixed to the casing, a region on the inner circumferential side from the projection portions and a region on the outer circumferential side from the projection portions communicate with each other through a gap in the circumferential direction between the lower end portions of the projection portions adjacent in the circumferential direction, and thus the force received by the cap from the wave is reduced, which is advantageous for stably fixing the cap to the casing for a long period of time. In addition, since the cap is an annular body, the top surface of the radio wave transmission portion is not entirely covered by the cap, and it is possible to prevent good radio wave communication with the detector from being impaired.

With the fluid leakage detection system according to the embodiment of the present invention, good radio wave communication between the radio wave transmission unit and the radio wave reception unit disposed outside the marine hose and the detector (IC tag) can be maintained for a long period of time. As a result, the ease of checking and certainty of detection of the fluid leakage can be ensured for a long period of time. In addition, even if an object comes into contact with the detector, the risk of damage to both the detector and the object can be reduced for a long period of time.

### Brief Description of Drawings

FIG. 1 is an explanatory diagram illustrating a marine hose according to an embodiment of the present invention.
FIG. 2 is an explanatory diagram illustrating an embodiment of a fluid leakage detection system in a longitudinal cross-sectional view in which a portion of the marine hose is enlarged.
FIG. 3 is an explanatory diagram illustrating a side view of a detector of FIG. 2.
FIG. 4 is an explanatory diagram illustrating a top view of the detector of FIG. 3.
FIG. 5 is an explanatory diagram illustrating a detector in an A-A cross-sectional view (longitudinal cross-sectional view) of FIG. 4.
FIG. 6 is an explanatory diagram illustrating a top view of the inside of a pressure holding chamber in FIG. 5.
FIG. 7 is an explanatory diagram illustrating a top view of the detector of FIG. 4 from which a cap is removed.
FIG. 8 is an explanatory diagram illustrating a casing of FIG. 7 in a side view.
FIG. 9 is an explanatory diagram illustrating the cap of FIG. 4 in a bottom view.
FIG. 10 is an explanatory diagram illustrating an exploded state of the detector of FIG. 5.
FIG. 11 is an explanatory diagram illustrating a state where the cap is attached to the casing of FIG. 5.
FIG. 12 is an explanatory diagram illustrating a longitudinal cross-sectional view of the detector in communication with a communication unit.
FIG. 13 is an explanatory diagram illustrating a modified example of the assembly in a longitudinal cross-sectional view.
FIG. 14 is an explanatory diagram illustrating a state where a casing and a cap of FIG. 13 are separated.
FIG. 15 is an explanatory diagram illustrating a top view of the casing of FIG. 14.
FIG. 16 is an explanatory diagram illustrating the cap of FIG. 14 in a bottom view.
FIG. 17 is an explanatory diagram illustrating another modified example of the assembly in a longitudinal cross-sectional view.
FIG. 18 is an explanatory diagram illustrating a state where a casing and a cap of FIG. 17 are separated.
FIG. 19 is an explanatory diagram illustrating a top view of the casing of FIG. 17.
FIG. 20 is an explanatory diagram illustrating the cap of FIG. 17 in a bottom view.
FIG. 21 is an explanatory diagram illustrating a modified example of the casing in a side view.
FIG. 22 is an explanatory diagram illustrating a top view of the casing of FIG. 21.
FIG. 23 is an explanatory diagram illustrating a detector that uses an assembly of the casing of FIG. 21 and a cap in a side view.
FIG. 24 is an explanatory diagram illustrating a top view of the detector of FIG. 23.
FIG. 25 is an explanatory diagram illustrating an embodiment of a fluid leakage detection system that uses a drone in a longitudinal cross-sectional view in which a portion of a marine hose is enlarged.

### Description of Embodiments

Hereinafter, an assembly of a casing for a fluid leakage detector for a marine hose and a cap (hereinafter referred to as an assembly 21) and a fluid leakage detection system (hereinafter referred to as a detection system) for a marine hose according to an embodiment of the present invention will be described with reference to the drawings.

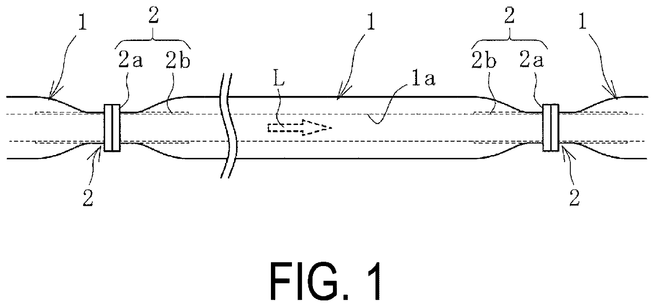

The assembly 21 and the detection system are used to detect the presence of leakage of fluid L from a flow path 1a of a floating type marine hose 1 illustrated in FIG. 1. The marine hose 1 is provided with connecting end portions 2 at both ends in the longitudinal direction for connecting to other marine hoses 1. The connecting end portion 2 includes a nipple 2b extending in the longitudinal direction of the marine hose 1 and a flange 2a joined to one end of the nipple 2b in the longitudinal direction. Generally, about the 8 to 10 marine hoses 1 are connected and used.

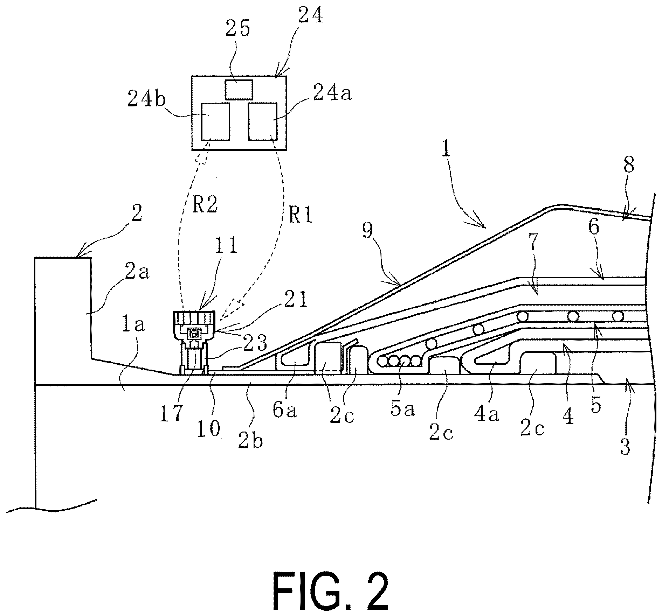

As illustrated in FIG. 2, between the nipples 2b at both ends of the marine hose 1 in the longitudinal direction, an inner surface layer 3, an inner circumferential side reinforcing layer 4, a body wire layer 5, a fluid retention layer 7, an outer circumferential side reinforcing layer 6, a buoyant layer 8, and an outer surface layer 9 are laminated in this order on the outer circumferential side of the flow path 1a starting from the inner circumferential side toward the outer circumferential side of the marine hose 1. The inner circumferential side of the inner surface layer 3 serves as the flow path 1a for the fluid L. Examples of the fluid L include crude oil, heavy oil, gasoline, LPG, water, seawater, chemicals (alcohols refined from gasoline), and the like.

The buoyant layer 8 is made of a material such as sponge rubber, polyurethane foam or the like that exhibits buoyancy to float the marine hose 1 above the sea. The outer surface layer 9 is formed of a non-water-permeable material such as rubber, and has a line pattern or the like having excellent visibility on the surface thereof.

An appropriate material is selected for the inner surface layer 3 depending on the type of the fluid L, and in a case where the fluid L is crude oil or the like, the inner surface layer 3 is made of nitrile rubber or the like having excellent oil resistance. The inner circumferential side reinforcing layer 4 and the outer circumferential side reinforcing layer 6 are each formed by laminating a plurality of reinforcing cord layers in which the reinforcing cords are covered with rubber. The body wire layer 5 is configured by spirally winding metal wires around the outer circumferential rubber of the inner circumferential side reinforcing layer 4 at predetermined intervals. The inner circumferential side reinforcing layer 4, the body wire layer 5, and the outer circumferential side reinforcing layer 6 are fixed to the nipple 2b by nipple wires 4a, 5a, 6a at one end of each and a fixing ring 2c protruding from the outer circumferential surface of the nipple 2b. The fluid retention layer 7 formed between the inner circumferential side reinforcing layer 4 and the outer circumferential side reinforcing layer 6 is a space for storing the fluid L that has leaked from the flow path 1a.

The detection system illustrated in FIG. 2 includes a detector 11, a communication pipe 10 extending on the surface (outer circumferential surface of the nipple 2b) of the marine hose 1 and communicably connecting the fluid retention layer 7 and the detector 11, a check valve 17, and a radio wave transmission unit 24a and a radio wave reception unit 24b disposed outside the marine hose 1. A transmission radio wave R1 is transmitted from the radio wave transmission unit 24a to the detector 11, and a return radio wave R2 is transmitted from the detector 11 to the radio wave reception unit 24b.

The radio wave transmission unit 24a and the radio wave reception unit 24b are disposed outside the marine hose 1 separately from the marine hose 1. In this embodiment, a communication unit 24 in which the radio wave transmission unit 24a, the radio wave reception unit 24b, and a calculation device 25 are integrated is used, but these units can be separate and independent. A known computer is used as the calculation device 25, and for example, a monitor or the like is attached to the communication unit 24.

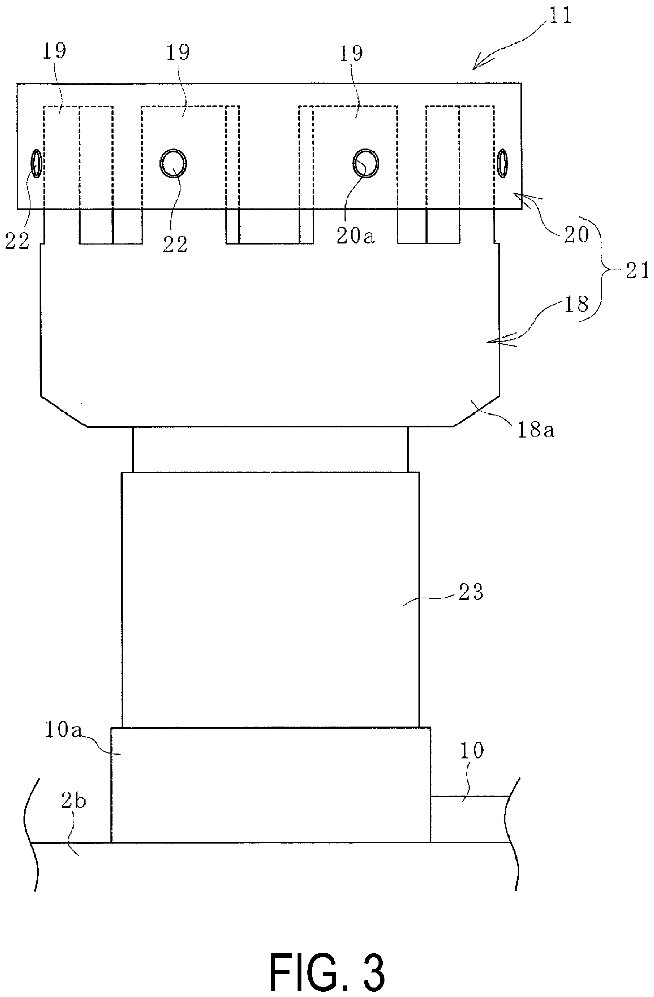

As illustrated in FIGS. 3 to 11, the detector 11 includes an assembly 21 composed of a casing 18 and a cap 20, and a pressure sensor unit 15 and a passive IC tag 12 housed in a pressure holding chamber 18c inside the casing 18.

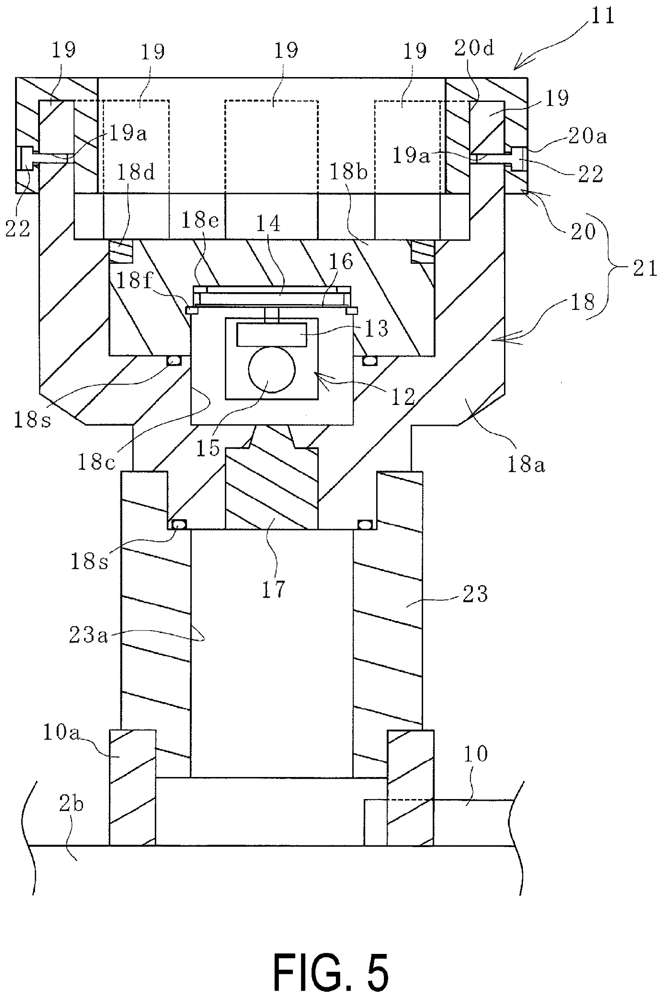

In this embodiment, as illustrated in FIG. 5, the detector 11 is connected to the communication pipe 10 via an adapter portion 23 made of metal and having a cylindrical shape. More specifically, a cylindrical pipe end connection portion 10a located at an end portion of the communication pipe 10 and the adapter portion 23 are screwed to be connected to each other. The adapter portion 23 and a base portion 18a of the casing 18 are connected to each other, and watertightness therebetween is ensured by an annular sealant 18s (O-ring). The inside of the adapter portion 23 is an introduction chamber 23a having watertightness. When the adapter portion 23 is not used, the base portion 18a and the pipe end connection portion 10a are connected to each other.

The casing 18 includes the base portion 18a made of metal and having a cylindrical shape, a radio wave transmission portion 18b that watertightly blocks the upper end portion side of the base portion 18a, and three or more projection portions 19 made of metal and projecting above the radio wave transmission portion 18b. In this embodiment, the casing 18 further includes an annular fixing portion 18d. The base portion 18a and the projection portions 19 are basically an integral body. The base portion 18a, the fixing portion 18d, and the projection portions 19 are formed of, for example, stainless steel.

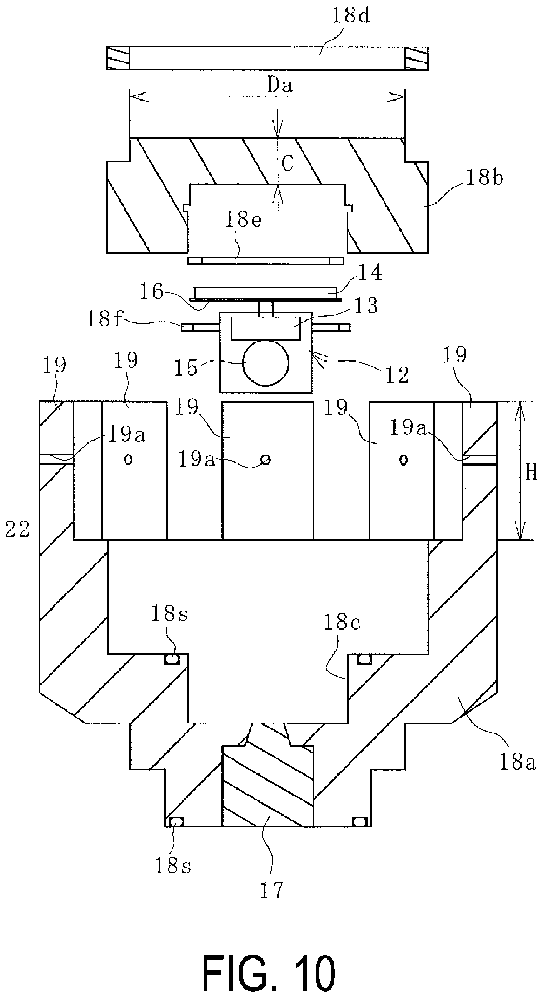

As illustrated in FIGS. 5 and 10, the base portion 18a includes therein a large-diameter recess in which the radio wave transmission portion 18b is disposed, and a small-diameter recess connected to a lower portion of the large-diameter recess. An upper end of the check valve 17 attached to a lower end portion of the base portion 18a is exposed at a bottom surface of the small-diameter recess. The annular sealant 18s (O-ring) is disposed inside the base portion 18a (at a bottom surface portion of the large-diameter recess) and on the lower surface of the base portion 18a. Note that the sealant 18s is appropriately disposed at a required position.

**In** this embodiment, the radio wave transmission portion 18b is formed in a disc shape and has a recess on a lower surface thereof. The recess on the lower surface of the radio wave transmission portion 18b and the small-diameter recess inside the base portion 18a are set to vertically face each other. The radio wave transmission portion 18b is mounted on the base portion 18a such that the lower surface is in contact with the bottom surface portion of the large-diameter recess inside the base portion 18a.

Since the sealant 18s is interposed between the lower surface of the radio wave transmission portion 18b and the bottom surface portion of the large-diameter recess inside the base portion 18a, the upper end portion side of the base portion 18a is watertightly blocked by the radio wave transmission portion 18b. In addition, the pressure holding chamber 18c is formed by being surrounded by the base portion 18a and the radio wave transmission portion 18b. In other words, the pressure holding chamber 18c having watertightness is formed by the small-diameter recess inside the base portion 18a and the recess on the lower surface of the radio wave transmission portion 18b.

The radio wave transmission portion 18b includes a circular cutout portion in a plan view at an outer edge of the top surface. The annular fixing portion 18d is disposed in the cutout portion. An outer circumferential surface of the fixing portion 18d is attachably and detachably screwed to an inner circumferential surface of an upper end opening of the base portion 18a. The radio wave transmission portion 18b is fixed to the base portion 18a in a state where the outer circumferential edge portion is pressed from above by the fixing portion 18d screwed with the inner circumferential surface of the upper end opening of the base portion 18a. As just described, the radio wave transmission portion 18b is fixed to the base portion 18a via the annular fixing portion 18d engaged with an outer edge portion of the radio wave transmission portion 18b.

The relative dielectric constant of the radio wave transmission portion 18b is set to 5.0 or less in order to easily allow the permeation of the transmission radio wave R1 and the return radio wave R2, is set to, for example, 2.0 or more and 5.0 or less, and is more preferably set to 2.5 or more and 3.0 or less. The radio wave transmission portion 18b is made of, for example, polycarbonate, polyamide, or epoxy resin as the material thereof in consideration of durability, shock resistance, and the like.

Further, the radio wave transmission portion 18b and the base portion 18a may have any specification as long as the pressure holding chamber 18c can be formed by using the radio wave transmission portion 18b and the base portion 18a. Furthermore, the radio wave transmission portion 18b can be fixed to the base portion 18a by using another component instead of the fixing portion 18d or by using another component in addition to the fixing portion 18d.

The projection portions 19 are disposed at intervals in the circumferential direction at positions on the outer circumferential side of the radio wave transmission portion 18b in a plan view. The projection portions 19 are preferably disposed at equal intervals in the circumferential direction of the radio wave transmission portion 18b. For example, three or more and eight or less projection portions 19 are disposed.

In this embodiment, the projection portion 19 extending straight upward is employed, but the shape is not limited to this shape. However, when upper end portions of the projection portions 19 are in contact with (joined to) each other, good radio wave communication between the IC tag 12 and the communication unit 24 cannot be ensured. Consequently, the upper end portions of the projection portions 19 are separated from each other.

The check valve 17 is disposed between the pressure holding chamber 18c and the introduction chamber 23a. The check valve 17 allows only the flow of the fluid L and gas from the introduction chamber 23a side to the pressure holding chamber 18c side, and restricts (blocks) the flow from the pressure holding chamber 18c side to the introduction chamber 23a side. In other words, the check valve 17 interposed between the communication pipe 10 and the pressure holding chamber 18c allows only the flow from the communication pipe 10 side to the pressure holding chamber 18c side, and restricts the flow from the pressure holding chamber 18c side to the communication pipe 10 side. Thus, when pressure P of the pressure holding chamber 18c rises, the pressure state is maintained. A known check valve can be used as the check valve 17.

The IC tag 12 includes an IC chip 13 and an antenna unit 14 connected to the IC chip 13. The pressure sensor unit 15 is connected to the IC tag 12 (the IC chip 13). The IC chip 13 has a very small size, for example, a vertical dimension and a horizontal dimension of 30 mm or less (corresponding to an outer diameter of 30 mm or less) and a thickness of 5 mm or less. The size of the antenna unit 14 is also very small, for example, the vertical dimension and the horizontal dimension are each 50 mm or less (corresponding to an outer diameter of 50 mm or less) and the thickness is 10 mm or less. In this embodiment, a ceramic antenna is used as the antenna unit 14, so the antenna is very compact.

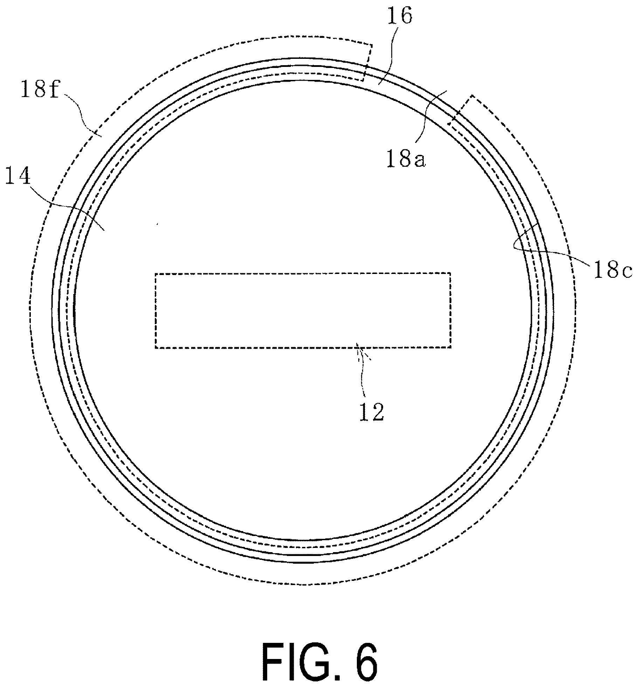

A plate-shaped metal ground unit 16 is arranged in contact with the lower surface of the antenna unit 14. In this embodiment, as illustrated in FIGS. 5 and 6, the IC tag 12 and the pressure sensor unit 15 are placed in the pressure holding chamber 18c in a state where the ground unit 16 is placed on a C-shaped ring 18f attachably and detachably fitted into an annular groove formed in the recess on the lower surface of the radio wave transmission portion 18b and an annular spacer 18e is disposed on the top surface of the antenna unit 14. The IC tag 12 and the pressure sensor unit 15 may be placed in the pressure holding chamber 18c without using the C-shaped ring 18f. The spacer 18e can be optionally provided. The antenna unit 14 employing the ceramic antenna, the small check valve 17 that can withstand high pressure (for example, 7 to 8 MPa), and the ground unit 16 are combined, which greatly contributes to downsizing of the detector 11.

The ground unit 16 can be in contact with the metal base portion 18a. With such a configuration, the base portion 18a and the projection portions 19 can assertively function as an antenna, and thus good radio wave communication between the IC tag 12 and the communication unit 24 can be easily ensured.

The pressure sensor unit 15 detects the pressure P in the pressure holding chamber 18c. The size of the pressure sensor unit 15 is about the same as that of the IC chip 13. Although the IC chip 13 and the pressure sensor unit 15 are suspended in the drawing, the IC chip 13 and the pressure sensor unit 15 can be placed flat as the antenna unit 14.

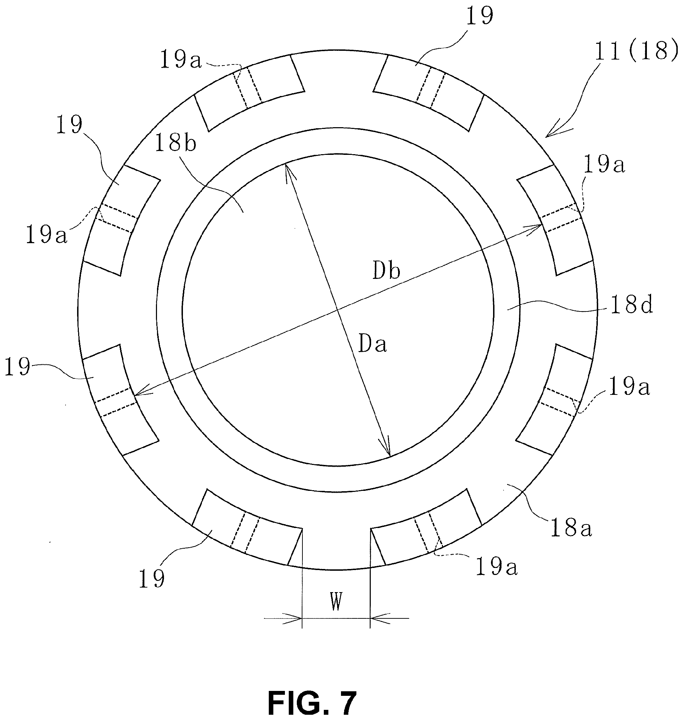

The larger the exposed area of the top surface of the radio wave transmission portion 18b is, the more advantageous it is to maintain good radio wave communication between the IC tag 12 and the communication unit 24; however, it is disadvantageous to ensure pressure resistance of the radio wave transmission portion 18b. Accordingly, as illustrated in FIG. 7, when the top surface of the radio wave transmission portion 18b is circular, a diameter Da is, for example, 40 mm or more and 70 mm or less. In other words, the top surface of the radio wave transmission portion 18b preferably has the exposed area corresponding to the diameter Da of 40 mm or more and 70 mm or less. A gap Db between the projection portions 19 facing each other in a plan view is set to 100% or more of the diameter Da. In addition, as illustrated in FIG. 10, the larger a thickness C of the top surface of the radio wave transmission portion 18b is, the more advantageous it is to ensure pressure resistance; however, it is disadvantageous to maintain good radio wave communication between the IC tag 12 and the communication unit 24. Accordingly, the thickness C of the top surface of the radio wave transmission portion 18b is set to, for example, 5 mm or more and 15 mm or less.

The specification, number, and positions of the projection portions 19 are based on the premise that the radio wave transmission portion 18b can be protected and good radio wave communication between the IC tag 12 and the communication unit 24 can be maintained. In order to protect the radio wave transmission portion 18b by the projection portions 19, it is preferable that a height H and a thickness of each of the projection portions 19 be large to some extent; however, it is an essential condition for the height H that the upper end of the projection portion 19 not be projected above the flange 2a in a state where the detector 11 is placed on the surface of the marine hose 1. In addition, when the height H and thickness of the projection portion 19 are extremely large, the occupied space increases, and thus the height H of the projection portion 19 is determined to be in the range of, for example, 15 mm or more and 40 mm or less, for example, and the thickness is determined to be in the range of, for example, 3 mm or more and 8 mm or less. The height H of the projection portion 19 is preferably 35% or more and 45% or less of the diameter Da of the top surface of the radio wave transmission portion 18b. The width of the projection portion 19 is determined such that an interval W between the adjacent projection portions 19 in the circumferential direction is, for example, 10 mm or more and is more preferably 15 mm or more.

The cap 20 is an annular body (cylindrical body) that continuously covers the upper end portions of the projection portions 19 in the circumferential direction in a plan view, and is formed of a known resin or rubber. The cap 20 has an inner diameter of, for example, 10 mm or more and 70 mm or less, and an outer diameter of 70 mm or more and 110 mm or less. The relative dielectric constant of the cap 20 is 1.0 or more and 8.0 or less.

Examples of the resin for forming the cap 20 include ABS, polyvinyl chloride, polycarbonate, polyimide, and epoxy. Since it is preferable that the cap 20 has excellent weather resistance, the cap 20 is formed of a resin or rubber having excellent weather resistance, or an anti-aging agent or the like for improving weather resistance is blended with the resin or rubber to be used, or a coating material having excellent weather resistance is applied to the surface of the cap 20. For example, a coating material such as an acrylic silicone resin, a polyurethane resin, an acrylic resin, or a vinyl chloride resin is used. In order to improve durability, reinforcing fibers (short fibers) can be mixed into the resin or rubber to be used. As the reinforcing fibers, known carbon fibers, glass fibers or the like can be used.

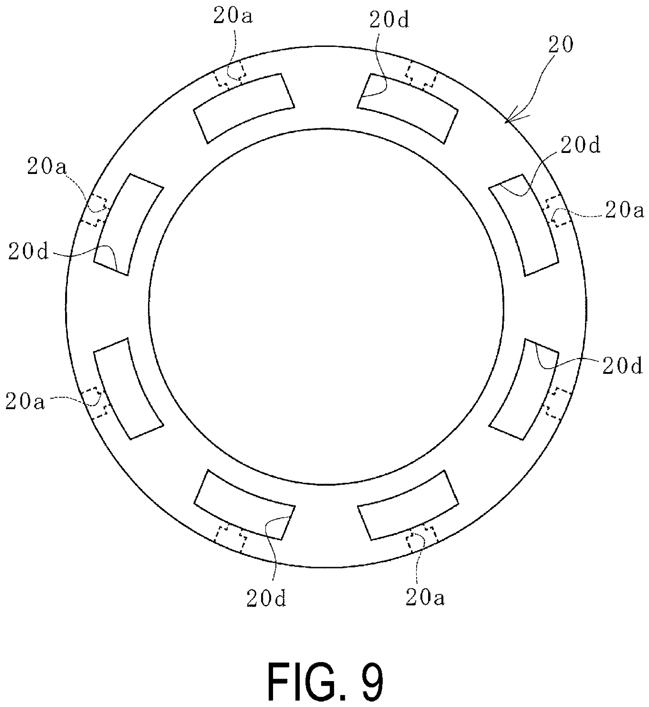

As illustrated in FIG. 9, the cap 20 is formed with a plurality of engaging portions 20d that engage with the upper end portions of the projection portions 19. As illustrated in FIG. 5, the cap 20 is disposed on the upper end portions of the projection portions 19 with the engaging portions 20d engaged with the upper end portions of the corresponding projection portions 19. In this embodiment, a plurality of holes that are arranged at intervals in the circumferential direction of the cap 20 and open in the bottom surface of the cap 20 are employed as the engaging portions 20d. The holes serving as the engaging portions 20d are formed in the cap 20 so as to correspond in number and arrangement to the projection portions 19.

The cap 20 may be colored (in orange or the like) so as to be noticeable in the ocean. While the surface of the cap 20 can be coated with a coating material in a noticeable color, it is advantageous to manufacture the cap 20 from a material colored in a noticeable color in order to maintain the color for a longer period of time.

As illustrated in FIGS. 3 to 5, in a state where the cap 20 is disposed on the upper end portions of the projection portions 19 and is fixed to the casing 18, a region on the inner circumferential side from the projection portions 19 and a region on the outer circumferential side from the projection portions 19 communicate with each other through a gap in the circumferential direction between the lower end portions of the projection portions 19 adjacent in the circumferential direction. That is, the cap 20 covers the upper end portions of the projection portions 19 but does not cover the projection portions 19 for the entire length in the height direction. The gap in the height direction between the lower end of the cap 20 and the lower end of each projection portion 19 (the top surface of the radio wave transmission portion 18b) is 10 mm or more, for example, 10 mm or more and 30 mm or less.

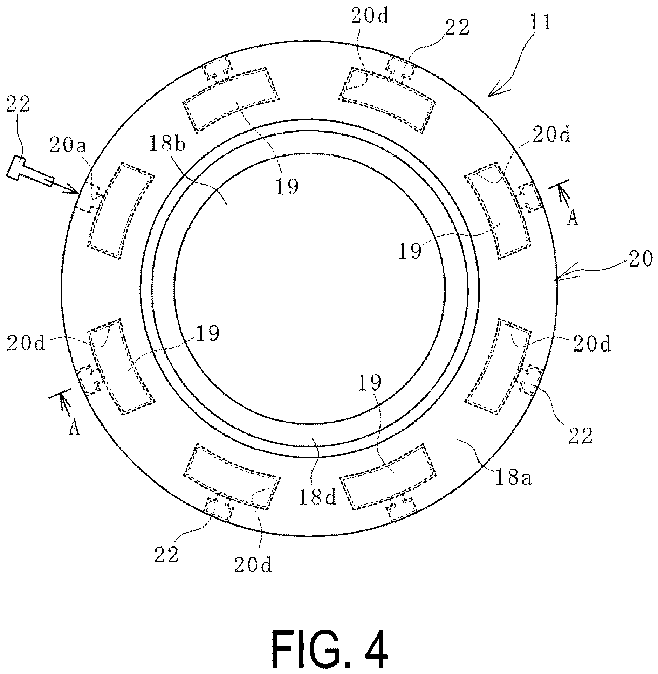

While there are various specifications for fixing the cap 20 to the casing 18, screws 22 are used in this embodiment. Accordingly, in the cap 20, insert holes 20a extending in the radial direction are formed at multiple locations spaced apart in the circumferential direction. Specifically, as illustrated in FIGS. 4 and 9, an insert hole 20a is formed in the outer circumferential surface of the cap 20 so as to communicate with each engaging portion 20d.

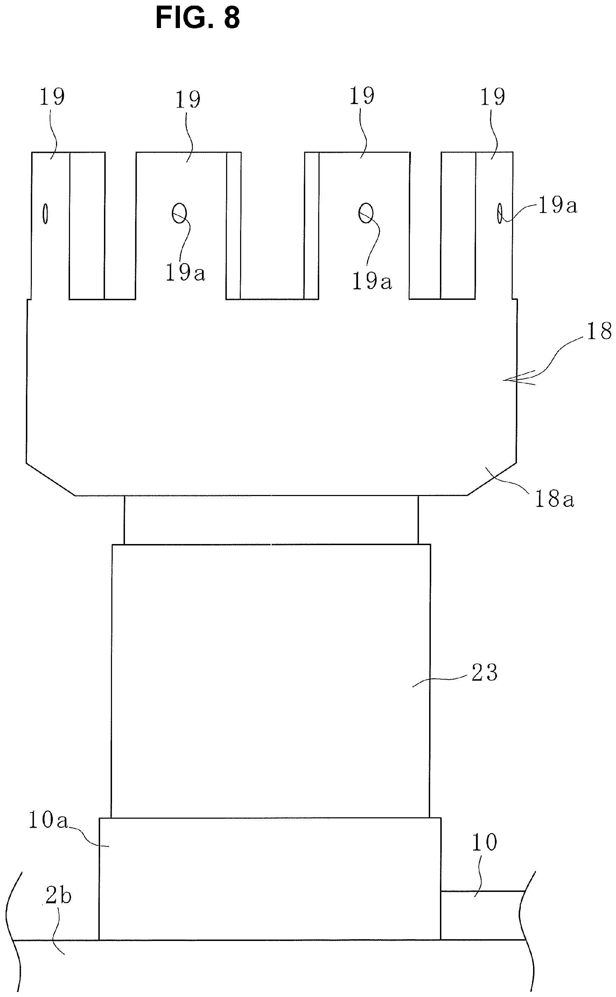

As illustrated in FIGS. 7 and 8, a screw hole 19a is formed in the outer circumferential surface of the plurality of projection portions 19. While the screw holes 19a are formed in all the projection portions 19 in this embodiment, it is only necessary that the screw holes 19a should be formed in a plurality of the projection portions 19, and it is more preferable that the screw holes 19a are formed in three or more projection portions 19. Further, the screw hole 19a may not pass through the projection portion 19 in the radial direction, but may extend halfway from the outer circumferential surface to the inner circumferential surface of the projection portion 19.

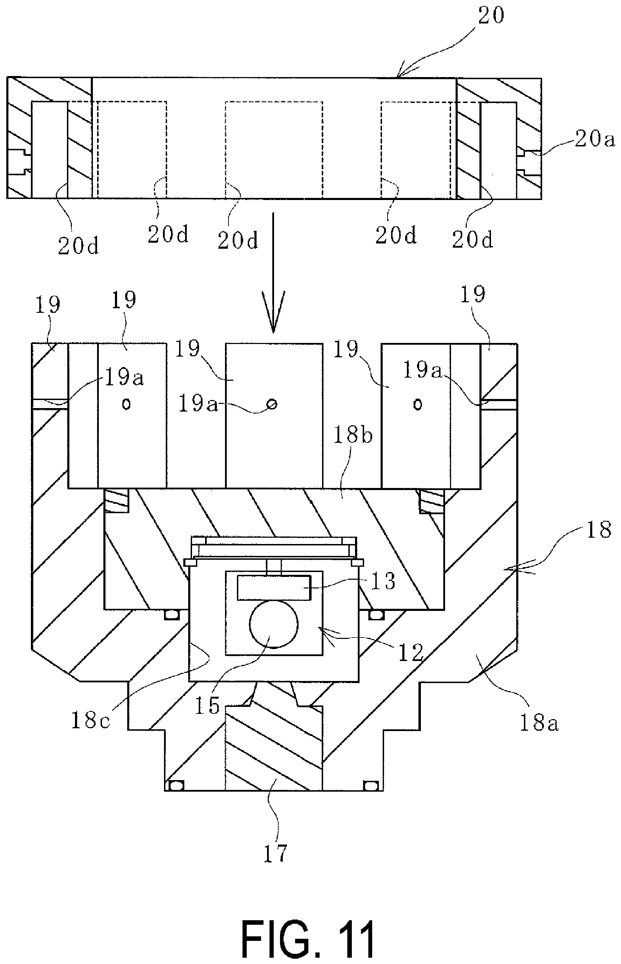

When fixing the cap 20 to the casing 18, as illustrated in FIG. 11, the cap 20 is moved from the upper side to the lower side of the projection portions 19, and the upper end portions of the projection portions 19 are inserted into the engaging portions 20d formed in the cap 20 so that the cap 20 is disposed on the upper end portions of the projection portions 19. Next, as illustrated in FIGS. 3 to 5, the screws 22 are inserted in the radial direction from the outer circumferential side toward the inner circumferential side of the cap 20 into the insert holes 20a communicating with the engaging portions 20d in which the tip end portions of the projection portions 19 are accommodated and engaged. The screws 22 are screwed into the screw holes 19a disposed opposed to the respective insert holes 20a, and thus the cap 20 is firmly fixed to the casing 18. While the screws 22 are screwed into the screw holes 19a of all the projection portions 19 in this embodiment, the screws 22 may be screwed into the screw holes 19a of every other projection 19 in the circumferential direction, for example, to fix the cap 20 to the casing 18. The head of the screw 22 is embedded in the insert hole 20a without protruding from the outer circumferential surface of the cap 20 to the outer circumferential side.

Hereinafter, an example of a detection procedure for determining whether or not the fluid L is leaking from the flow path 1a by using this detection system will be described.

A worker approaches the marine hose 1 on a work boat or the like, periodically or when necessary, in order to perform work to confirm whether there is leakage of the fluid L. Then, as illustrated in FIG. 2, the communication unit 24 is operated to transmit the transmission radio wave R1 from the radio wave transmission unit 24a toward the detector 11, and the transmission radio wave R1 is used to generate electric power in the IC tag 12. The IC tag 12 transmits the return radio wave R2 by the electric power, and the radio wave reception unit 24b receives the return radio wave R2. At this time, the detected pressure data detected by the pressure sensor unit 15 is sent via the return radio wave R2, and the detected pressure data received by the radio wave reception unit 24b is input into the calculation device 25.

In other words, the IC tag 12 and the communication unit 24 form an RFID (Radio Frequency IDentification) system. The frequencies and outputs of the radio waves R1 and R2 to be communicated are appropriately set; however, since the passive IC tag 12 is used, the communication distance of the radio waves R1 and R2 between the IC tag 12 and the communication unit 24 is, for example, in the range of several tens of centimeters to several meters. The frequency of the radio waves (R1 and R2) used for wireless communication between the IC tag 12 and the communication unit 24 is mainly in the UHF band (depending on the country, range of 860 MHz or higher and 930 MHz or lower, range of 915 MHz or higher and 930 MHz in Japan), and the HF band (13.56 MHz) may also be used.

The calculation device 25 stores a reference value Pc of the pressure P in the pressure holding chamber 18c for determining whether the fluid L is leaking from the flow path 1a. In order to avoid a wrong detection, an appropriate range of the reference value Pc is determined in advance by conducting experiments and simulations in consideration of the specifications and use conditions of the marine hose 1, and the reference value Pc is set within this appropriate range and stored in the calculation device 25.

The calculation device 25 compares the pressure value of the input detected pressure data with the reference value Pc. When the fluid L does not flow into the fluid retention layer 7, there is no particularly large fluctuation in the pressure P of the pressure holding chamber 18c, and thus the pressure value of the detected pressure data is smaller than the reference value Pc. As a result, the calculation device 25 determines that the fluid L is not leaking from the flow path 1a, and indicates the result by a monitor display or a sound.

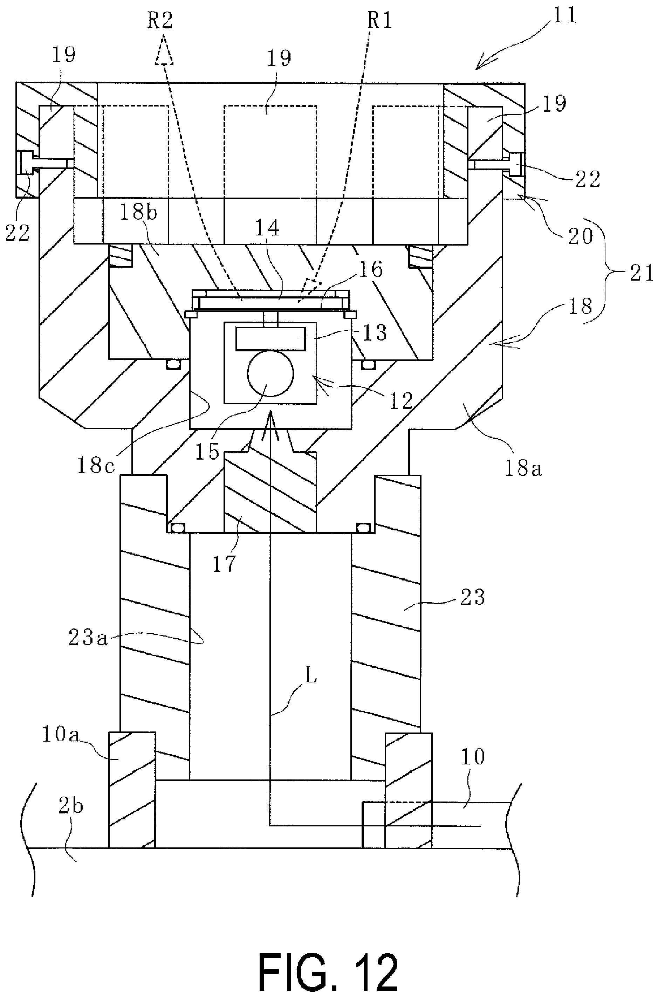

On the other hand, when the inner surface layer 3, the inner circumferential side reinforcing layer 4, and the like are damaged, the fluid L flows into the fluid retention layer 7 from the flow path 1a, and as this happens, as illustrated in FIG. 12, the fluid L flows through the communication pipe 10, the introduction chamber 23a, and the check valve 17, and the pressure P in the pressure holding chamber 18c increases. The increased pressure P is held by the check valve 17 and detected by the pressure sensor unit 15. Consequently, when the transmission radio wave R1 is transmitted from the radio wave transmission unit 24a to the detector 11 during the leakage confirmation work of the fluid L, the maximum pressure value of the pressure P up to now is received by the radio wave reception unit 24b as detected pressure data detected by the pressure sensor unit 15 and is input into the calculation device 25.

The calculation device 25 compares the pressure value of the input detected pressure data with the reference value Pc. As a result, when the pressure value of the detected pressure data is equal to or higher than the reference value Pc, it is determined that the fluid L is leaking from the flow path 1a, and the result is notified by a monitor display or a sound.

Since this detection system uses the passive IC tag 12, the work of monitoring the status of the battery life becomes unnecessary. In addition, the pressure in the pressure holding chamber 18c is held by using the check valve 17, and the detected pressure data detected by the pressure sensor unit 15 and received by the radio wave reception unit 24b is used as an index, and thereby whether the fluid L leaks from the flow path 1a can be more reliably determined.

In this embodiment, the calculation device 25 automatically determines whether the fluid L leaks from the flow path 1a. In addition, for example, the operator can determine whether the fluid L leaks by comparing the preset reference value Pc with the pressure value of the detected pressure data received by the radio wave reception unit 24b.

Other information may be stored in the IC chip 13 and transmitted via the return radio wave R2. For example, information such as the specification information about the marine hose 1, the manufacturing information, and the period when the IC tag 12 is installed in the marine hose 1 or the like can be stored in the IC chip 13, and the information can be transmitted to the radio wave reception unit 24b.

By using the detector 11, the top surface of the radio wave transmission portion 18b is protected by the aforementioned projection portions 19. Consequently, the risk of damage to the radio wave transmission portion 18b is reduced, which is advantageous for improvement of the durability of the detector 11. The projection portions 19 are disposed at intervals in the circumferential direction and the upper end portions of the projection portions 19 are separated from each other in a plan view, and thus the disadvantage that good radio wave communication between the IC tag 12 and the communication unit 24 is impaired by the projection portions 19 is avoidable. As a result, the ease of checking and certainty of detection of the fluid leakage can be ensured while the top surface of the radio wave transmission portion 18b is protected.

In addition, the upper end portions of the projection portions 19 are covered by the cap 20 described above, and thus even if the upper end portions of the projection portions 19 made of metal come into contact with a certain object, it is advantageous in reducing the risk of damage to both the detector 11 and the object. For example, even if another marine hose or rope existing around the detector 11 comes into contact with the detector 11, it is possible to reduce damage to the detector 11 and the marine hose or rope. Further, since the cap 20 is firmly fixed to the casing 18, the cap 20 is not easily removed from the casing 18 even if an object comes into contact with the cap 20.

In a state where the cap 20 is fixed to the casing 18, a region on the inner circumferential side from the projection portions 19 and a region on the outer circumferential side from the projection portions 19 communicate with each other through a gap in the circumferential direction between the lower end portions of the projection portions 19 adjacent in the circumferential direction, and thus seawater flows through the gap. Therefore, the force received by the cap 20 from the wave is reduced, and the cap 20 is prevented from being detached from the casing 18 by the wave force, which is advantageous for stably fixing the cap 20 to the casing 18 for a long period of time.

Since the cap 20 is an annular body, the top surface of the radio wave transmission portion 18b is not entirely covered by the cap 20. Therefore, it is possible to prevent good radio wave communication between the IC tag 12 and the communication unit 24 from being impaired. Since a dielectric substance has an effect of causing a hole through which radio wave passes to seem large (the wavelength of the radio wave becomes shorter than that in the air), this effect occasionally contributes to slight improvement of radio wave communication by the fixation of the cap 20 to the casing 18.

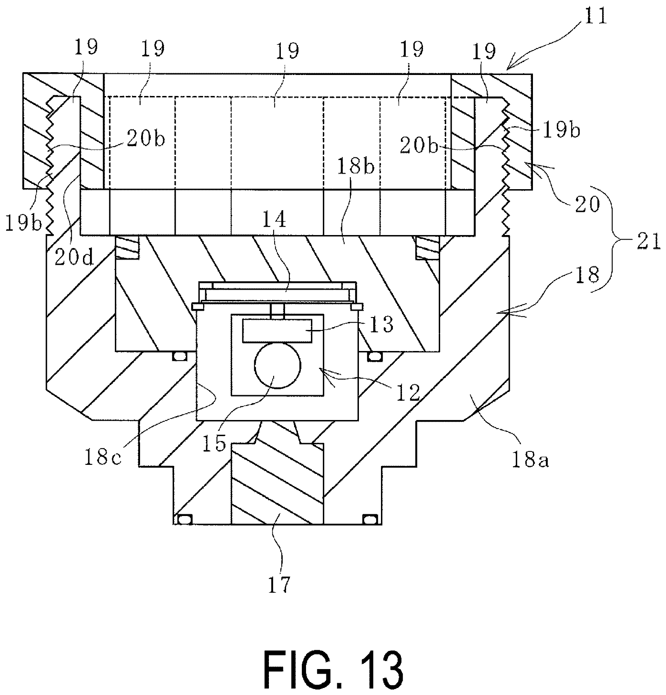

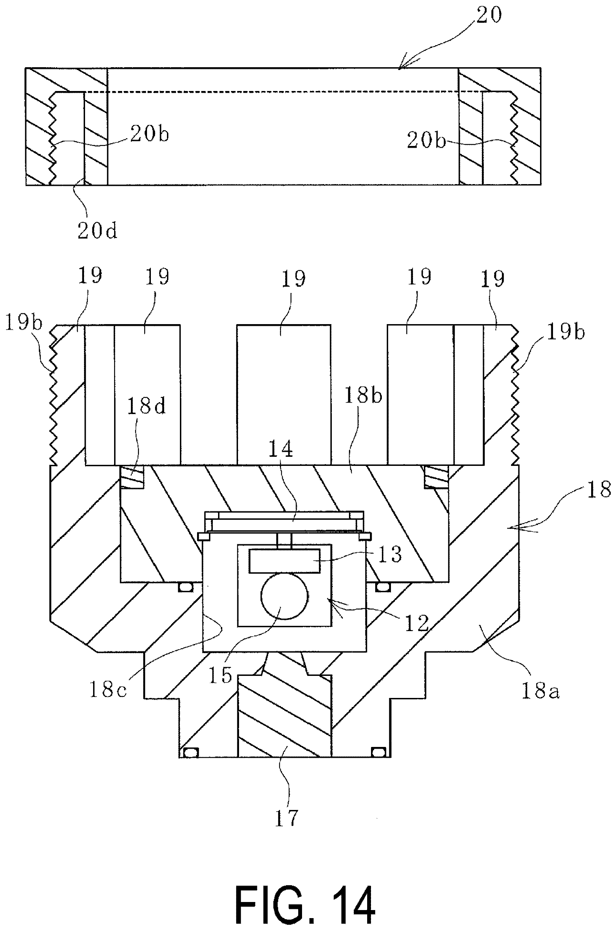

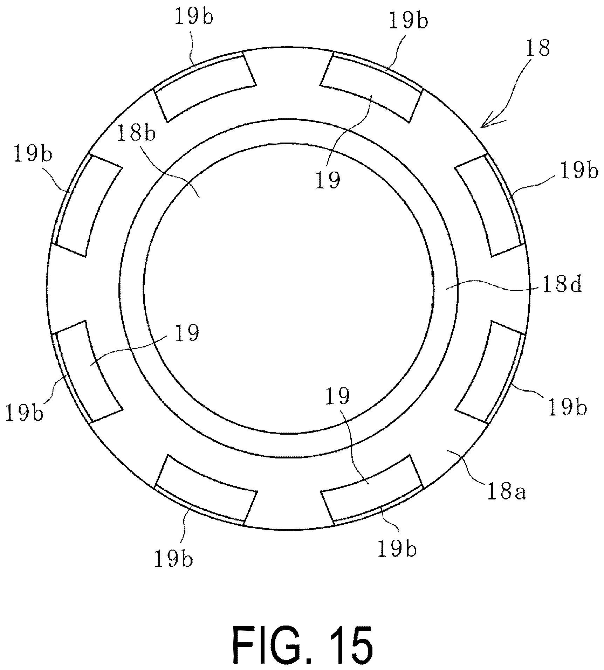

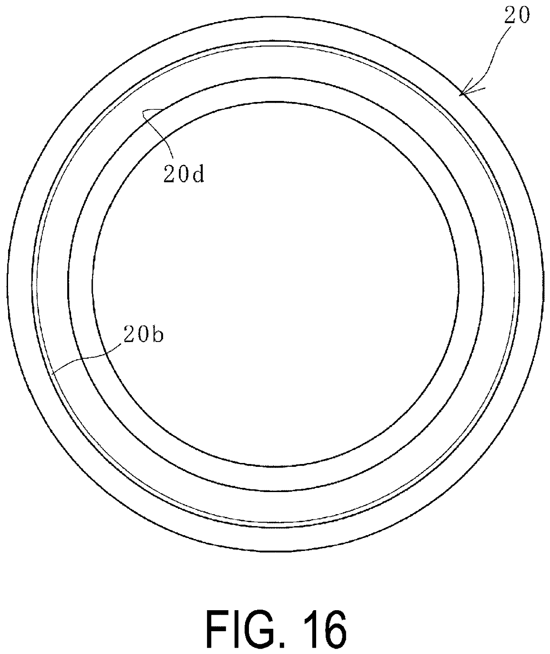

In an assembly 21 illustrated in FIGS. 13 to 16, the cap 20 is firmly fixed to the casing 18 using a protruding thread portion 19b and a cap thread portion 20b. The cap thread portion 20b extending in the circumferential direction is formed in the cap 20. Specifically, an annular groove that is continuous in the circumferential direction of the cap 20 and opens in the bottom surface of the cap 20 is employed as the engaging portion 20d. The cap thread portion 20b extending in the circumferential direction is formed in the outer circumferential surface of the annular groove serving as the engaging portion 20d. The protruding thread portion 19b extending in the circumferential direction is formed in the outer circumferential surfaces of the protruding portions 19.

When the cap 20 is rotated in the circumferential direction at the upper end portions of the protruding portions 19 about the central axes of the cap 20 (the protruding portions 19) in a plan view, the cap thread portion 20b and the protruding thread portions 19b are screwed together. As the cap 20 is rotated, the engaging portion 20d is engaged with the upper end portion of each of the projection portions 19 to gradually move the cap 20 downward, and the cap 20 is fixed to the casing 18 in a state of being disposed on the upper end portion of each of the projection portions 19.

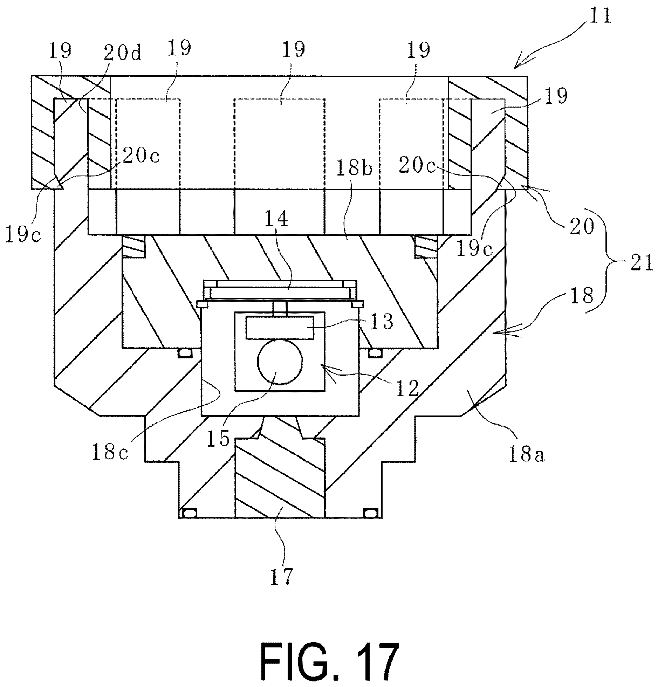

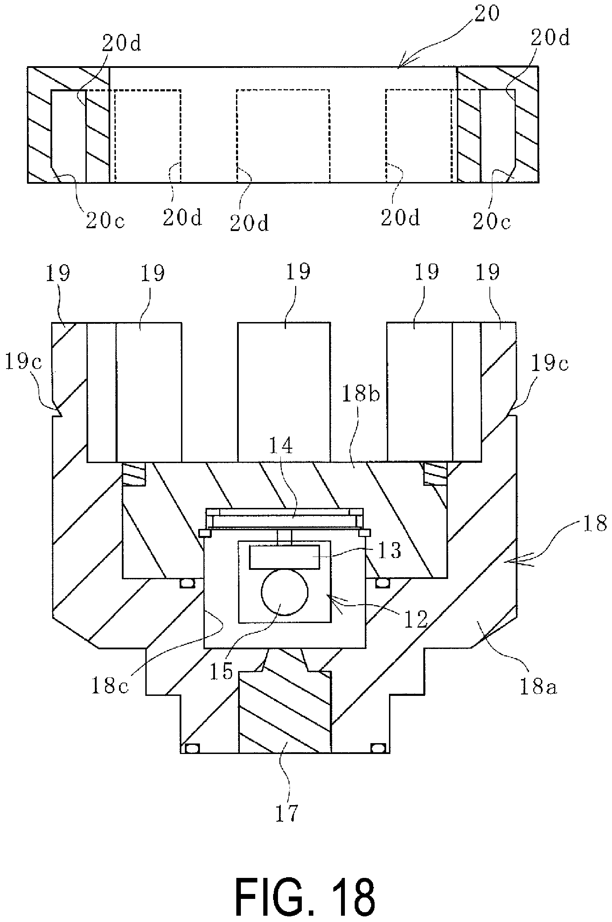

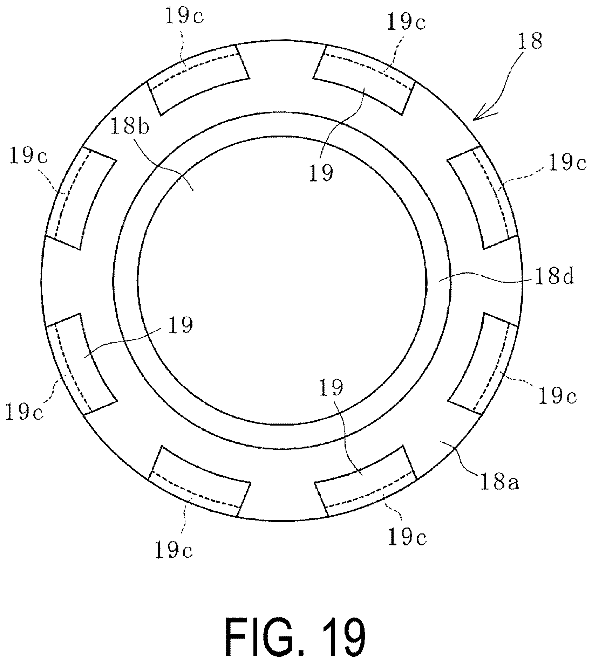

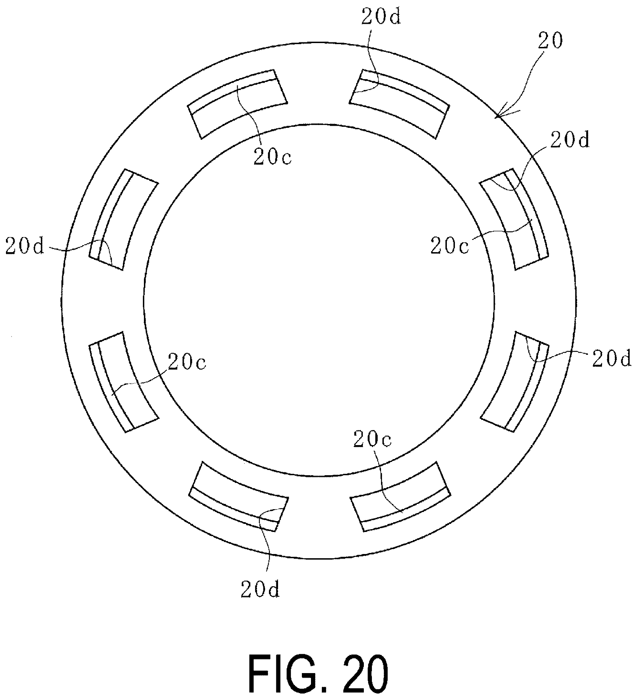

In an assembly 21 illustrated in FIGS. 17 to 20, the cap 20 is firmly fixed to the casing 18 using protruding fitting portions 19c and cap fitting portions 20c. The cap fitting portions 20c are formed in the cap 20. More specifically, a plurality of holes that are arranged at intervals in the circumferential direction of the cap 20 and open in the bottom surface of the cap 20 are employed as the engaging portions 20d. The cap fitting portions 20c protruding radially inward are formed in the outer circumferential surfaces of the plurality of holes serving as the engaging portions 20d.

The protruding fitting portions 19c recessed inward in the radial direction are formed in the outer circumferential surfaces of the plurality of protruding portions 19. When the cap 20 is pressed downward and the engaging portions 20d are engaged with the upper end portions of the corresponding protruding portions 19 and the cap 20 is disposed on the upper end portion of each protruding portion 19, the cap 20 is fixed to the casing 18 with the cap fitting portions 20c and the protruding fitting portions 19c fitted to each other.

The cap fitting portions 20c recessed radially outward may be employed, and the protruding fitting portions 19c projecting radially outward can be employed. Further, instead of the plurality of holes arranged at intervals in the circumferential direction, an annular groove that is continuous in the circumferential direction of the cap 20 and opens in the bottom surface of the cap 20 can be employed as the engaging portion 20d.

In order to fix the cap 20 to the casing 18, an adhesive can be used together. That is, when fixing the cap 20 to the casing 18 using each of the above-described methods, the cap 20 and the tip end portions of the projection portions 19 can be fixed to each other using a known adhesive.

In addition, the above-described method of fixing the cap 20 to the casing 18 using the screws 22 and the above-described method of fixing the cap 20 to the casing 18 by screwing the protruding thread portions 19b and the cap thread portion 20b can be used in combination. In addition, the above-described method of fixing the cap 20 to the casing 18 using the screws 22 and the above-described method of fixing the cap 20 to the casing 18 by fitting the protruding fitting portions 19c and the cap fitting portions 20c may be used in combination.

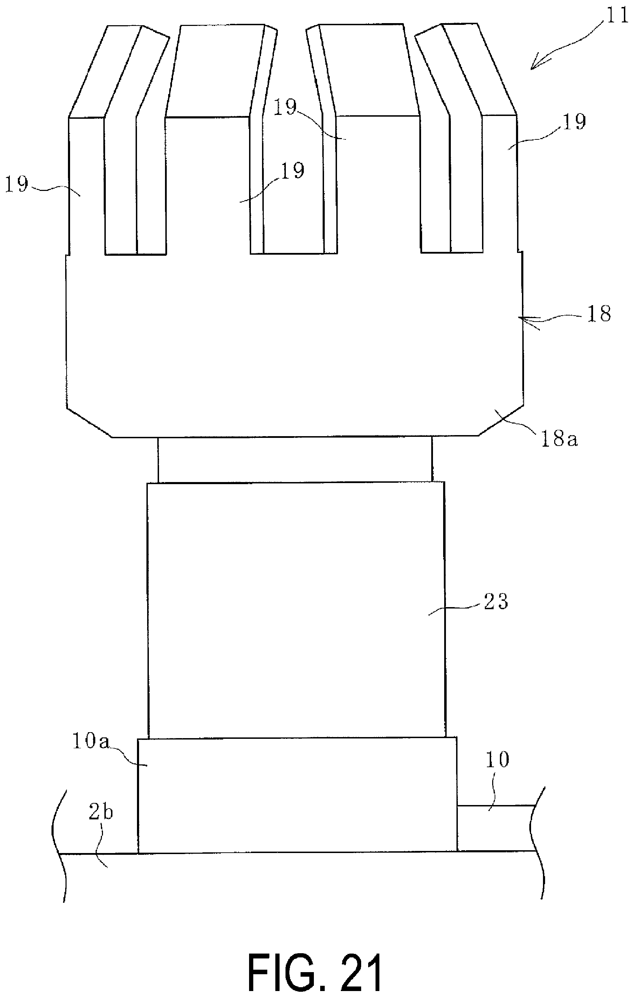

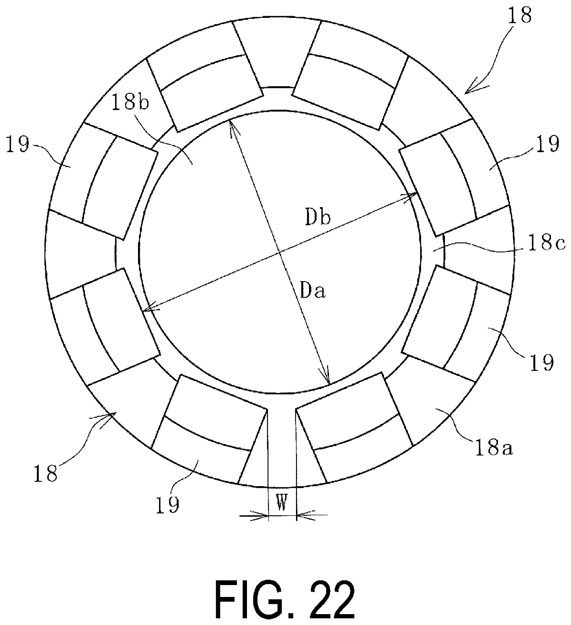

Basically, the shape of the projection portion 19 is preferably a shape extending straight upward; however, another shape can be adopted in order to improve protective effect on the radio wave transmission portion 18b. As illustrated in FIGS. 21 and 22, the projection portions 19 can bend at an intermediate position in the vertical direction and extend toward the center side of the radio wave transmission portion 18b in a plan view.

However, the lower end of each projection portion 19 is disposed on the outer circumference side of the outer circumferential edge of the top surface of the radio wave transmission portion 18b, and the height position at which the projection portion 19 is bent midway is set to a position of 8 mm or higher from the top surface of the radio wave transmission portion 18b. Further, in a plan view, a gap Db between opposed upper ends of bent portions of the projection portions 19 is 50% or more, preferably 70% or more, and more preferably 100% or more of the diameter Da of the top surface of the radio wave transmission portion 18b. Furthermore, in a plan view, a gap W between upper ends of portions above the bent positions of the projection portions 19 adjacent in the circumferential direction is preferably 3 mm or more and more preferably 5 mm or more.

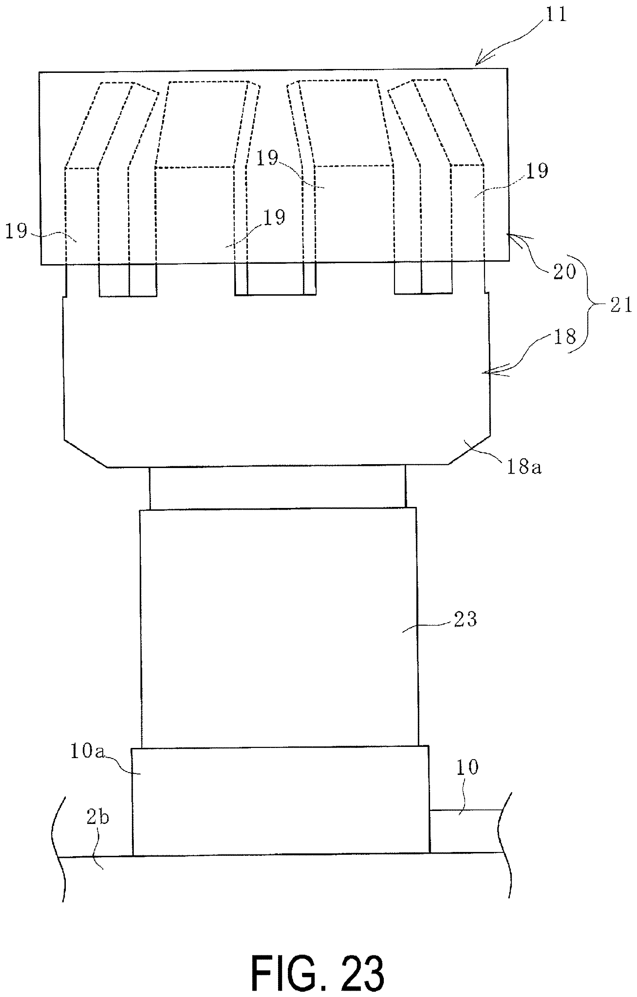

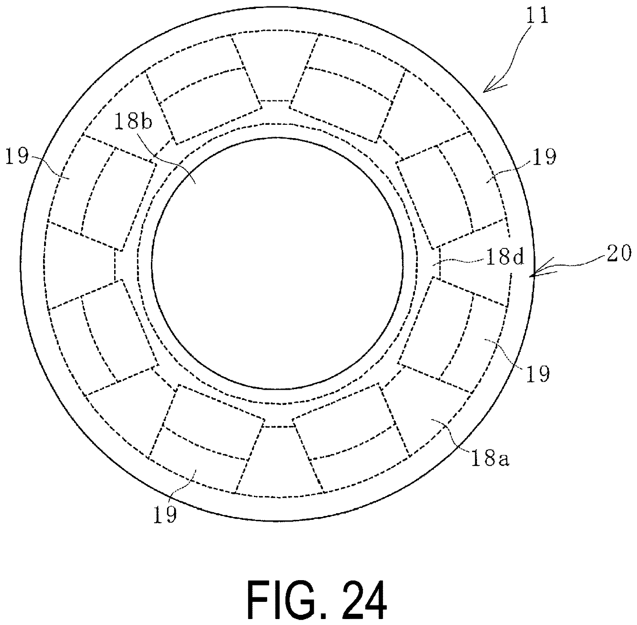

When the casing 18 illustrated in FIGS. 21 and 22 is used, the cap 20 can be fixed to the casing 18 in the same manner as the above-described various caps 20. That is, the casing 18 and the cap 20 can constitute an assembly 21 illustrated in FIGS. 23 and 24.

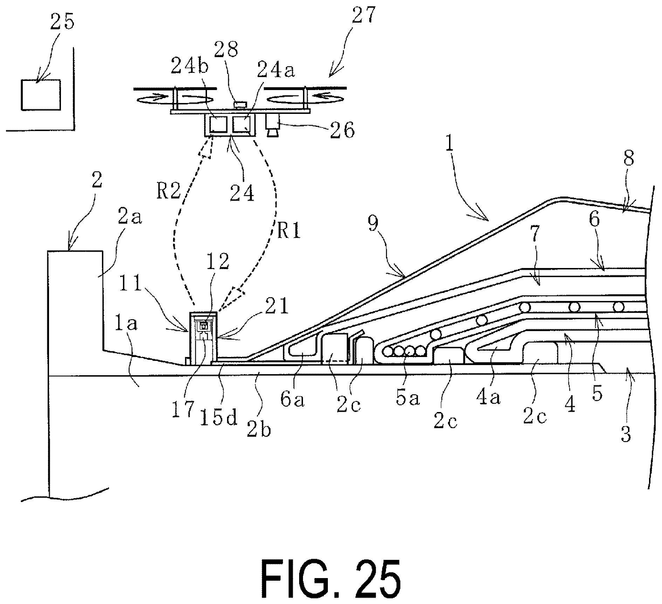

With the detection system according to an embodiment of the present invention, the operator can perform the work of confirming fluid leakage not only by holding the handy communication unit 24 but also by mounting the communication unit 24 on a drone 27 as illustrated in FIG. 25. Unlike the above-described embodiment, the detection system illustrated in FIG. 25 includes a drone 27 on which a communication unit 24 (a radio wave transmission unit 24a and a radio wave reception unit 24b) and a camera device 26 are mounted, and a calculation device 25 to which detected pressure data received by the radio wave reception unit 24b and image data acquired by the camera device 26 are input. The calculation device 25 is disposed, for example, on a ship or in a remote administrative office.

The camera device 26 acquires image data of the marine hose 1 from the airspace above the marine hose 1. As the camera device 26, various known digital cameras and the like that acquire image data Mr of still images or moving images can be employed.

The drone 27 is equipped with a GNSS receiver 28, and the position coordinates of the drone 27 are grasped in real time by the GNSS receiver 28. The operator can move the drone 27 to the airspace above and near the detector 11 (IC tag 12) based on the sequentially acquired image data Mr, and can also move the drone 27 to the airspace above and near the detector 11 (IC tag 12) by automatic control operation by inputting the position coordinates of the detector 11 to the control unit of the drone 27.

When performing the work of confirming fluid leakage using this detection system, the drone 27 is flown from a measurement base located, for example, on land or on a ship, and moved into the airspace above and near the detector 11 (IC tag 12) placed on the surface of the marine hose 1. In this state, wireless communication is performed between the IC tag 12 and the communication unit 24, and the pressure data detected by the pressure sensor unit 15 and the image data Mr acquired by the camera device 26 are input to the calculation device 25.

The presence or absence of fluid leakage is determined by the calculation device 25 based on the detected pressure data, and the presence or absence of abnormality outside the marine hose 1 is determined based on the image data Mr. Using the drone 27 eliminates the need for the operator to approach the marine hose 1 when performing the confirmation work, further reducing the work burden. Further, when the cap 20 is colored in a noticeable color such as orange, the position of the detector 11 can be easily confirmed using the image data Mr from the camera device 26, so that the communication unit 24 can be more easily moved to the airspace above and near the detector 11 (IC tag 12).

### Reference Signs List

1 Marine hose
1a Flow path
2 Connecting end portion
2a Flange
2b Nipple
2c Fixing ring
3 Inner surface layer
4 Inner reinforcing layer
4a Nipple wire
5 Body wire layer
5a Nipple wire
6 Outer reinforcing layer
6a Nipple wire
7 Fluid retention layer
8 Buoyant layer
9 Outer surface layer
10 Communication pipe
10a Pipe end connection portion
11 Detector
12 IC tag
13 IC chip
14 Antenna unit
15 Pressure sensor unit
16 Ground unit
17 Check valve
18 Casing
18a Base portion
18c Radio wave transmission portion
18c Pressure holding chamber
18d Fixing portion
18e Spacer
18f C-shaped ring
18s Sealant
19 Projection portion
19a Screw hole
19b Protruding thread portion
19c Protruding fitting portion
20 Cap
20a Insert hole
20b Cap thread portion
20c Cap fitting portion
20d Engaging portion
21 Assembly
22 Screw
23 Adapter portion
23a Introduction chamber
24 Communication unit
24a Radio wave transmission unit
24b Radio wave reception unit
25 Calculation device
26 Camera device
27 Drone
28 GNSS receiver

## Claims

1. An assembly (21) of a casing (18) for a fluid leakage detector for a marine hose (1) and a cap (20), the casing being installed on a surface of a marine hose and communicably connected to a fluid retention layer (7) formed in the marine hose, the cap being fixed to the casing;
the casing including a base portion (18a) made of metal and having a cylindrical shape, a radio wave transmission portion (18b) that watertightly blocks an upper end portion side of the base portion, and three or more projection portions (19) made of metal and projecting from the base portion above the radio wave transmission portion and a pressure holding chamber surrounded by the base portion and the radio wave transmission portion,
the projection portions being disposed at intervals in a circumferential direction at positions on an outer circumferential side of the radio wave transmission portion in a plan view,
upper end portions of the projection portions being separated from each other, and
a pressure sensor unit (15) and a passive IC tag (12) connected to the pressure sensor unit being accommodated in the pressure holding chamber (18c)
the cap being an annular body made of resin or rubber that continuously covers an upper end portion of each of the projection portions in the circumferential direction in a plan view and being formed with an engaging portion that engages with the upper end portion of each of the projection portions; and
in a state where the engaging portion engages with the upper end portion of each of the projection portions and the cap is disposed on the upper end portion of each of the projection portions and is fixed to the casing, a region on an inner circumferential side from the projection portions and a region on an outer circumferential side from the projection portions communicating with each other through a gap in the circumferential direction between lower end portions of the projection portions adjacent in the circumferential direction.

2. The assembly of a casing for a fluid leakage detector for a marine hose and a cap according to claim 1, wherein
in the cap, insert holes extending in a radial direction are formed at multiple locations spaced apart in the circumferential direction,
screw holes are formed in outer circumferential surfaces of the plurality of projection portions,
a screw to be inserted in the radial direction into each of the insert holes from an outer circumferential side toward an inner circumferential side of the cap is included, and
in a state where the engaging portion engages with the upper end portion of each of the projection portions and the cap is disposed in the upper end portion of each of the projection portions, the screw inserted into each of the insert holes at the plurality of locations engages with each of the screw holes disposed opposed to the insert holes, and thus the cap is fixed to the casing.

3. The assembly of a casing for a fluid leakage detector for a marine hose and a cap according to claim 1 or 2, wherein
a cap thread portion extending in the circumferential direction is formed in the cap,
protruding thread portions extending in the circumferential direction are formed in outer circumferential surfaces of the protruding portions, and
in a state where the cap is rotated in the circumferential direction at the upper end portion of each of the protruding portions, thus the cap thread portion and each of the protruding screw portions are screwed, the engaging portion engages with the upper end portion of each of the protruding portions, and the cap is disposed on the upper end portion of each of the protruding portions, the cap is fixed to the casing.

4. The assembly of a casing for a fluid leakage detector for a marine hose and a cap according to claim 1 or 2, wherein
a cap fitting portion is formed in the cap,
protruding fitting portions are formed in outer circumferential surfaces of the plurality of protruding portions, and
the engaging portion engages with the upper end portion of each of the protruding portions, the cap is disposing on the upper end portion of each of the protruding portions, thus the cap fitting portion and each of the protruding fitting portions are fitted, and the cap is fixed to the casing.

5. A fluid leakage detection system for a marine hose, comprising:
the assembly of a casing for a fluid leakage detector for a marine hose and a cap according to any one of claims 1 to 4;
a detector including the pressure sensor unit and the IC tag accommodated in the pressure holding chamber;
a communication pipe extending on a surface of the marine hose and communicably connecting the fluid retention layer and the detector;
a check valve allowing only a flow from a side of the communication pipe to a side of the pressure holding chamber; and
a radio wave transmission unit and a radio wave reception unit disposed outside the marine hose;
a return radio wave being transmitted from the IC tag in response to a transmission radio wave transmitted from the radio wave transmission unit, and
detected pressure data from the pressure sensor unit being sent via the return radio wave and received by the radio wave reception unit.

6. The fluid leakage detection system for a marine hose according to claim 5, comprising:
a drone on which the radio wave transmission unit, the radio wave reception unit, and a camera device are mounted; and
a calculation device to which the detected pressure data received by the radio wave reception unit and image data acquired by the camera device are input.

## Patentansprüche

1. Baugruppe (21) aus einem Gehäuse (18) für einen Flüssigkeits-Leckagedetektor für einen Marineschlauch (1) und einer Kappe (20),
wobei das Gehäuse an einer Oberfläche eines Marineschlauchs installiert ist und kommunizierend mit einer in dem Marineschlauch ausgebildeten Fluidrückhalteschicht (7) verbunden ist und die Kappe an dem Gehäuse befestigt ist;
wobei das Gehäuse einen Basisabschnitt (18a), der aus Metall besteht und eine zylindrische Form hat, einen Funkwellen-Sendeabschnitt (18b), der eine Seite eines oberen Endabschnitts des Basisabschnitts wasserdicht abschließt, sowie drei oder mehr Vorsprungsabschnitte (19) aufweist, die aus Metall bestehen und von dem Basisabschnitt oberhalb des Funkwellen-Sendeabschnitts vorstehen, sowie eine Druckhaltekammer einschließt, die von dem Basisabschnitt und dem Funkwellen-Sendeabschnitt umschlossen ist,
die Vorsprungsabschnitte in einer Draufsicht in Abständen in einer Umfangsrichtung an Positionen an einer Außenumfangsseite des Funkwellen-Sendeabschnitts angeordnet sind,
obere Endabschnitte der Vorsprungsabschnitte voneinander getrennt sind, und
eine Drucksensor-Einheit (15) sowie ein mit der Drucksensor-Einheit verbundener passiver IC-Tag (12) in der Druckhaltekammer (18c) aufgenommen sind,
wobei die Kappe ein aus Harz oder Kautschuk bestehender ringförmiger Körper ist, der einen oberen Endabschnitt jedes der Vorsprungsabschnitte in der Umfangsrichtung in einer Draufsicht durchgehend abdeckt und mit einem Eingriffsabschnitt versehen ist, der mit dem oberen Endabschnitt jedes der Vorsprungsabschnitte in Eingriff ist; und
in einem Zustand, in dem der Eingriffsabschnitt mit dem oberen Endabschnitt jedes der Vorsprungsabschnitte in Eingriff ist und die Kappe an dem oberen Endabschnitt jedes der Vorsprungsabschnitte angeordnet und an dem Gehäuse befestigt ist, ein Bereich an einer Innenumfangsseite von den Vorsprungsabschnitten ausgehend und ein Bereich an einer Außenumfangsseite von den Vorsprungsabschnitten ausgehend miteinander über einen Zwischenraum in der Umfangsrichtung zwischen unteren Endabschnitten der Vorsprungsabschnitte miteinander in Verbindung stehen, die in der Umfangsrichtung benachbart sind.

2. Baugruppe aus einem Gehäuse für einen Flüssigkeits-Leckagedetektor für einen Marineschlauch und einer Kappe nach Anspruch 1, wobei
in der Kappe Einführungslöcher, die sich in einer radialen Richtung erstrecken, an mehreren in der Umfangsrichtung beabstandeten Stellen ausgebildet sind,
Schraubenlöcher in Außenumfangsflächen der Vielzahl von Vorsprungsabschnitten ausgebildet sind,
eine in der radialen Richtung in jedes der Einführungslöcher von einer Außenumfangsseite zu einer Innenumfangsseite der Kappe hin einzuführende Schraube eingeschlossen ist, und
in einem Zustand, in dem der Eingriffsabschnitt mit dem oberen Endabschnitt jedes der Vorsprungsabschnitte in Eingriff ist und sich die Kappe in dem oberen Endabschnitt jedes der Vorsprungsabschnitte befindet, die in jedes der Einführungslöcher an der Vielzahl von Stellen eingeführte Schraube mit jedem der Schraubenlöcher in Eingriff ist, die den Einführungslöchern gegenüberliegen, und so die Kappe an dem Gehäuse befestigt ist.

3. Baugruppe aus einem Gehäuse für einen Flüssigkeits-Leckagedetektor für einen Marineschlauch und einer Kappe nach Anspruch 1 oder 2, wobei
ein Kappen-Gewindeabschnitt, der sich in der Umfangsrichtung erstreckt, in der Kappe ausgebildet ist,
vorstehende Gewindeabschnitte, die sich in der Umfangsrichtung erstrecken, in Außenumfangsflächen der vorstehenden Abschnitte ausgebildet sind, und
in einem Zustand, in dem die Kappe in der Umfangsrichtung an dem oberen Endabschnitt jedes der vorstehenden Abschnitte gedreht wird und damit der Kappen-Gewindeabschnitt und jeder der vorstehenden Schraubenabschnitte verschraubt werden, der Eingriffsabschnitt mit dem oberen Endabschnitt jedes der vorstehenden Abschnitte in Eingriff kommt und die Kappe an dem oberen Endabschnitt jedes der vorstehenden Abschnitte angeordnet ist, die Kappe an dem Gehäuse befestigt wird.

4. Baugruppe aus einem Gehäuse für einen Flüssigkeits-Leckagedetektor für einen Marineschlauch und einer Kappe nach Anspruch 1 oder 2, wobei
ein Kappen-Passabschnitt in der Kappe ausgebildet ist,
vorstehende Passabschnitte in Außenumfangsflächen der Vielzahl vorstehender Abschnitte ausgebildet sind, und
der Eingriffsabschnitt mit dem oberen Endabschnitt jedes der vorstehenden Abschnitte in Eingriff ist, sich die Kappe an dem oberen Endabschnitt jedes der vorstehenden Abschnitte befindet, und so der Kappen-Passabschnitt sowie jeder der vorstehenden Passabschnitte in Passung sind und die Kappe an dem Gehäuse befestigt ist.

5. Flüssigkeits-Leckagedetektionssystem für einen Marineschlauch, umfassend:
die Baugruppe aus einem Gehäuse für einen Flüssigkeits-Leckagedetektor für einen Marineschlauch und einer Kappe nach einem der Ansprüche 1 bis 4,
einen Detektor, der die Drucksensor-Einheit und den IC-Tag einschließt, die in der Druckhaltekammer aufgenommen sind;
eine Verbindungsleitung, die sich an einer Oberfläche des Marineschlauchs erstreckt und die Flüssigkeitsrückhalteschicht und den Detektor kommunizierend verbindet;
ein Rückschlagventil, das nur einen Strom von einer Seite der Verbindungsleitung zu einer Seite der Druckhaltekammer zulässt; und
eine Funkwellen-Sendeeinheit sowie eine Funkwellen-Empfangseinheit, die außerhalb des Marineschlauchs angeordnet sind;
wobei in Reaktion auf eine von der Funkwellen-Sendeeinheit gesendete Sende-Funkwelle eine Rück-Funkwelle von dem IC-Tag gesendet wird, und
erfasste Druckdaten von der Drucksensor-Einheit über die Rück-Funkwelle gesendet und durch die Funkwellen-Empfangseinheit empfangen werden.

6. Flüssigkeits-Leckagedetektionssystem für einen Marineschlauch nach Anspruch 5, umfassend:
eine Drohne, an der die Funkwellen-Sendeeinheit, die Funkwellen-Empfangseinheit sowie eine Kameravorrichtung installiert sind; und
eine Berechnungsvorrichtung, in die die durch die Funkwellen-Empfangseinheit empfangenen erfassten Druckdaten und durch die Kameravorrichtung erfasste Bilddaten eingegeben werden.

## Revendications

1. Ensemble (21) constitué d'un boîtier (18) pour un détecteur de fuite de fluide pour
un tuyau marin (1) et d'un capuchon (20),
le boîtier étant installé sur une surface d'un tuyau marin et relié en communication à une couche de rétention de fluide (7) formée dans le tuyau marin, le capuchon étant fixé au boîtier ;
le boîtier comportant une partie de base (18a) constituée de métal et ayant une forme cylindrique, une partie de transmission d'onde radio (18b) qui bloque de manière étanche à l'eau un côté partie d'extrémité supérieure de la partie de base, et trois ou plus parties en saillie (19) constituées de métal et faisant saillie depuis la partie de base au-dessus de la partie de transmission d'onde radio, et une chambre de maintien de pression entourée de la partie de base et de la partie de transmission d'onde radio, les partie en saillie étant disposées à des intervalles dans une direction circonférentielle à des positions situées sur un côté circonférentiel extérieur de la partie de transmission d'onde radio sur une vue en plan,
des partie d'extrémité supérieure des partie en saillie étant séparées les unes des autres, et
une unité de capteur de pression (15) et une étiquette IC passive (12) reliée à l'unité de capteur de pression étant logées dans la chambre de maintien de pression (18c),
le capuchon étant un corps annulaire constitué de résine ou caoutchouc qui recouvre de manière continue une partie d'extrémité supérieure de chacune des parties en saillie dans la direction circonférentielle sur vue en plan, et étant formé avec une partie de mise en prise qui vient en prise avec la partie d'extrémité supérieure de chacune des parties en saillie ; et
dans un état où la partie de mise en prise vient en prise avec la partie d'extrémité supérieure de chacune des parties en saillie et où le capuchon est disposé sur la partie d'extrémité supérieure de chacune des parties en saillie et est fixé au boîtier, une région sur un côté circonférentiel intérieur par rapport aux parties en saillie et une région sur côté circonférentiel extérieur par rapport aux parties en saillie communiquent l'une avec l'autre à travers un écartement, dans la direction circonférentielle, entre des parties d'extrémité inférieure des parties en saillie adjacentes dans la direction circonférentielle.

2. Ensemble constitué d'un boîtier pour un détecteur de fuite de fluide pour un tuyau marin et d'un capuchon selon la revendication 1, dans lequel
dans le capuchon, des trous d'insertion s'étendant dans une direction radiale sont formés en de multiples emplacements espacés dans la direction circonférentielle,
des trous pour vis sont formés dans des surfaces circonférentielles extérieures de la pluralité de parties en saillie,
une vis destinée à être insérée dans la direction radiale dans chacun des trous d'insertion depuis un côté circonférentiel extérieur vers un côté circonférentiel intérieur du capuchon est incorporée, et
dans un état où la partie de mise en prise vient en prise avec la partie d'extrémité supérieure de chacune des parties en saillie et où le capuchon est disposé dans la partie d'extrémité supérieure de chacune des parties en saillie, la vis insérée dans chacun des trous d'insertion à la pluralité d'emplacements vient en prise avec chacun des trous pour vis disposés en vis-à-vis des trous d'insertion, et ainsi le capuchon est fixé au boîtier.

3. Ensemble constitué d'un boîtier pour un détecteur de fuite de fluide pour un tuyau marin et d'un capuchon selon la revendication 1 ou 2, dans lequel
une partie filetée de capuchon s'étendant dans la direction circonférentielle est formée dans le capuchon,
des partie filetées en saillie s'étendant dans la direction circonférentielle sont formées dans des surfaces circonférentielles extérieures des parties en saillie, et
dans un état où le capuchon est tourné dans la direction circonférentielle au niveau de la partie d'extrémité supérieure de chacune des parties en saillie, de sorte que la partie filetée de capuchon et chacune des parties filetées en saillie sont vissées, la partie de mise en prise vient en prise avec la partie d'extrémité supérieure de chacune des parties en saillie, et le capuchon est disposé sur la partie d'extrémité supérieure de chacune des partie en saillie, le capuchon est fixé au boîtier.

4. Ensemble constitué d'un boîtier pour un détecteur de fuite de fluide pour un tuyau marin et d'un capuchon selon la revendication 1 ou 2, dans lequel
une partie d'ajustement de capuchon est formée dans le capuchon,
des parties d'ajustement en saillie sont formées dans des surfaces circonférentielles extérieures de la pluralité de parties en saillie, et
la partie de mise en prise vient en prise avec la partie d'extrémité supérieure de chacune des parties en saillie, le capuchon est disposé sur la partie d'extrémité supérieure de chacune des parties en saillie, de sorte que la partie d'ajustement de capuchon et chacune des partie d'ajustement en saillie sont ajustées, et le capuchon est fixé au boîtier.

5. Système de détection de fuite de fluide pour un tuyau marin, comprenant :
l'ensemble constitué d'un boîtier pour un détecteur de fuite de fluide pour un tuyau marin et d'un capuchon selon l'une quelconque des revendications 1 à 4 ;
un détecteur comportant l'unité de capteur de pression et l'étiquette IC logé dans la chambre de maintien de pression ;
un tuyau de communication s'étendant sur une surface du tuyau marin et reliant en communication la couche de rétention de fluide et le détecteur ;
un clapet anti-retour n'autorisant qu'un écoulement depuis un côté du tuyau de communication vers un côté de la chambre de maintien de pression ; et
une unité de transmission d'onde radio et une unité de réception d'onde radio disposées à l'extérieur du tuyau marin ;
une onde radio de retour étant transmise par l'étiquette IC en réponse à une onde radio de transmission transmise par l'unité de transmission d'onde radio, et
des données de pression détectée provenant de l'unité de capteur de pression étant envoyées via l'onde radio de retour et reçues par l'unité de réception d'onde radio.

6. Système de détection de fuite de fluide pour un tuyau marin selon la revendication 5, comprenant :
un drone sur lequel l'unité de transmission d'onde radio, l'unité de réception d'onde radio et un dispositif caméra sont montés ; et
un dispositif de calcul dans lequel sont entrées les données de pression détectée reçues par l'unité de réception d'onde radio et des données d'image acquises par le dispositif caméra.
